# EUROPEAN PATENT SPECIFICATION

(11) **EP 0 551 178 B1**
(45) Date of publication and mention of the grant of the patent: **18.06.1997**
(21) Application number: 93300043.2
(22) Date of filing: 06.01.1993
(51) Int. Cl.: H04N 17/04

(54) **Signal generator for television set with on-screen display signal**
Signalgenerator für ein Fernsehgerät mit Bildschirmanzeigesignal
Générateur de signaux pour poste de télévision avec signal d'affichage sur écran

(30) Priority: 07.01.1992 JP 18538/92
(43) Date of publication of application: 14.07.1993
(73) Proprietor: SONY CORPORATION, Tokyo (JP)
(72) Inventor: Fujiki, Mikio, c/o Sony Corporation, Shinagawa-ku, Tokyo (JP)
(74) Representative: Nicholls, Michael John

(56) References cited:
- EP-A- 0 372 257
- EP-A- 0 448 267
- EP-A- 0 453 335
- DE-A- 4 041 446
- GB-A- 2 155 714
- PATENT ABSTRACTS OF JAPAN vol. 9, no. 136 (E-320)12 June 1985 & JP-A-60 020 689
- PATENT ABSTRACTS OF JAPAN vol. 11, no. 86 (M-572)17 March 1987 & JP-A-61 241 044

## Description

The present invention relates to an on-screen display apparatus adapted for use in adjusting the picture qualities of a television signal.

Conventional television monitors are generally equipped with functions of adjusting the picture qualities inclusive of chrome, hue, brightness and contrast levels, so that a user can adjust such qualities manually. If a desired adjustment mode is selected by an operator in adjusting one of the picture qualities, a bar-graph indicator or the like can be displayed on a television monitor (hereinafter referred to as a monitor). And when the operator depresses a key (e.g., "+" or "-") provided on a remote controller or the like, the appropriate picture quality is adjusted while the length of the indicator is changed in response to such depression.

However, the conventional display content represented visually on the monitor screen at the time of picture quality adjustment includes at most an indicator and the kind of quality to be adjusted, and it is impossible for the operator to know a proper manipulation for adjustment of the picture quality unless he has sufficient expert knowledge or reads the operation manual.

GB-A-2,155,714 describes a system for adjusting picture quality by selecting the desired attribute from a menu. The apparatus then provides an indication of the chosen attribute, and its current setting, on the display.

It is therefore an object of the present invention to provide an improved on-screen display apparatus which is capable of sequentially displaying on a monitor the procedure for picture quality adjustments to facilitate the manipulation performed by an operator for the adjustments.

According to one aspect of the present invention, there is provided an on-screen display apparatus for visually representing a picture quality adjustment process on a television monitor. The apparatus comprises a memory as a storage means for storing messages which signify the procedure for picture quality adjustments, and a CPU as a control means for sequentially retrieving the messages under control in accordance with execution of the adjusting manipulation and displaying the messages on the monitor. The apparatus further comprises a key input unit manipulated by an operator to transmit a desired command to the control means. Such key input unit has pattern selector keys, a message/enter key and arrow keys.

In the on-screen display apparatus of the constitution mentioned, messages signifying the operational procedure for adjusting the picture qualities such as chrome, hue, brightness and contrast levels are stored previously in the memory and, upon completion of one adjustment item by the operator, the CPU retrieves the messages sequentially and displays on the monitor screen the message for the next quality adjustment.

According to the present invention there is provided an on-screen display apparatus for use in picture adjustments on a television monitor, comprising:
a memory means for storing messages which signify the procedure of picture adjustments; and
a control means for controlling the operation in such a manner as to retrieve the messages from said memory means and to display the messages on said monitor characterised in that during picture adjustment one of a plurality of test patterns is displayed on said display.

The present invention will be further described by way of example in the following description which will be given with reference to the illustrative accompanying drawings, in which:-
Fig. 1 is a block diagram of an embodiment representing the on-screen display apparatus of the present invention;
Fig. 2 (a) through (c) show exemplary patterns displayed on a monitor;
Fig. 3 is a plan view of a key input unit employed in the apparatus of Fig. 1; and
Figs. 4 through 18 show exemplary messages displayed on the monitor.

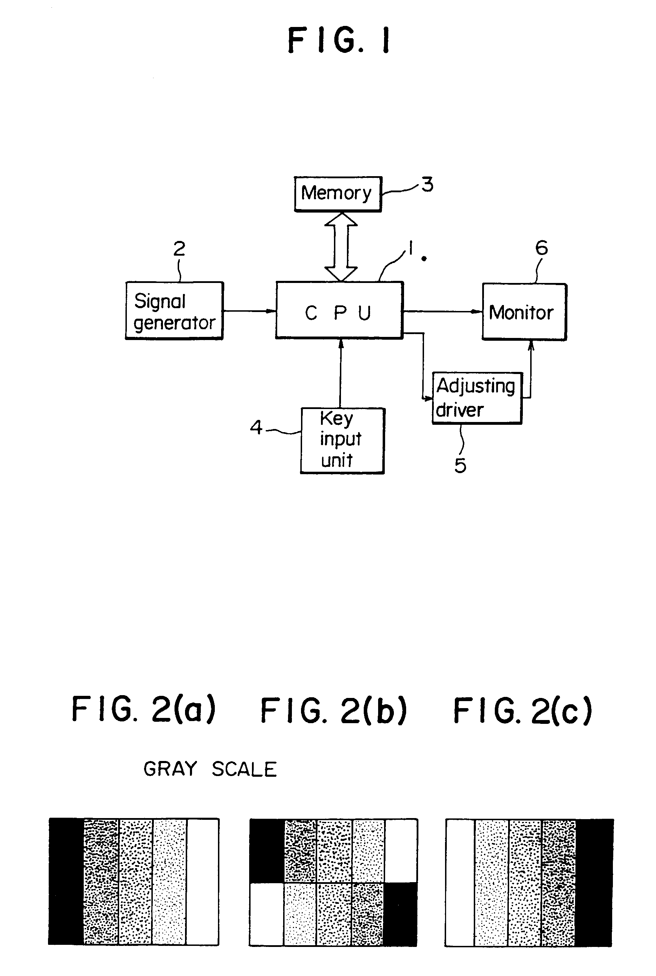

Hereinafter an exemplary embodiment of the present invention will be described in detail with reference to the accompanying drawings. Fig. 1 is a block diagram showing the constitution of an embodiment which represents the on-screen display apparatus of the present invention. The on-screen display apparatus comprises a CPU 1 serving as a control means; a signal generator 2 for generating a predetermined pattern such as color bars; a memory 3 as a storage means for storing various messages therein; a key input unit 4 such as a remote controller manipulated by an operator to transmit a desired command to the CPU 1; a picture quality adjusting driver 5 for controlling each of electronic variable resistors or the like in a television monitor so as to adjust the appropriate picture quality in response to the command transmitted by the operator; and a monitor 6 such as a CRT.

Fig. 2 (a) through (c) show exemplary patterns obtained from the signal generator 2. Each of such patterns is termed a gray scale which consists of bands of sequentially different brightness values ranging from a black level to a white level. In the gray scale of Fig. 2, (a) is an example where a black level is at the left end of the screen, (c) is another example where a black level is at the right end thereof, and (b) is a further example where mutually inverse gray scales are arranged in upper and lower steps. The signal generator 2 is capable of generating at least one of such gray scales. However, there may be contrived a modification where any of the three kinds of gray scales can be selectively displayed. In this case, if the gray scales are sequentially chargeable as (a) - (b) - (c) - (a) .... through manipulation of the key input unit 4 by the operator, then it becomes possible to select the easiest-to-see gray scale for the operator.

The signal generator 2 is also capable of generating, in addition to the gray scale mentioned, an SMPTE color bar pattern which is composed of seven-color bars of red, green, blue, yellow, cyan, magenta and white. The signal generator 2 may be so formed as to further display, in compliance with individual requirements, a crosshatched pattern like a checkerboard on the entire screen, a window pattern merely in a portion of the screen, or a white pattern displayed at a white level.

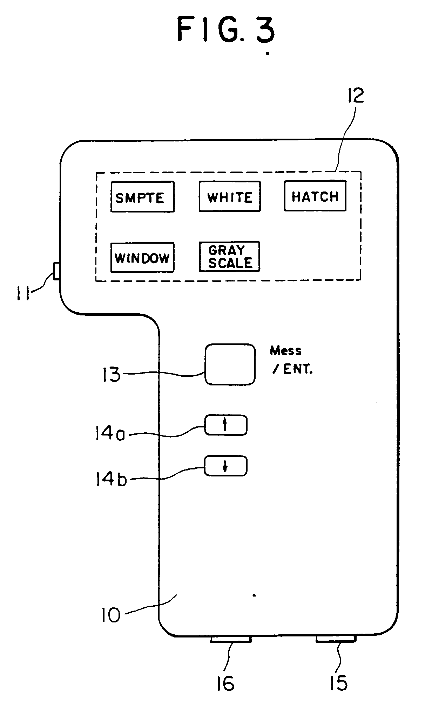

Fig. 3 is a plan view showing an exemplary constitution of the key input unit 4. A power switch 11 is provided on one side of a body 10 to turn on or off the power supply for the key input unit 4. On the front face of the body 10, there are disposed selector keys 12 for selecting any of patterns generated from the signal generator 2, a message/enter key (hereinafter referred to as an enter key) 13 for shifting the process to a desired picture quality adjusting mode or for indicating display of undermentioned messages or confirmation of each adjustment operation; and arrow keys 14a and 14b used in the operation for each picture quality adjustment. On the lower side of the body 10, there are provided a cable connecting terminal 15 for connection to a television system including the CPU 1 and the monitor 6, and an external power connecting terminal 16 for connection of an external power supply.

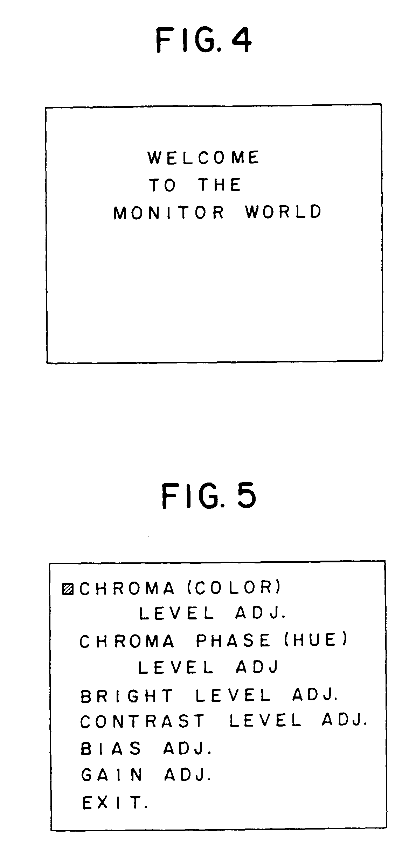

Now the specific method and operation for picture quality adjustment will be described below in detail. First, when the enter key 13 in the key input unit 4 is depressed, the CPU 1 retrieves a message of Fig. 4 from the memory 3 and displays such message on the monitor 6. In the following description, it is assumed that the entire messages to be displayed on the monitor 6 are previously stored in the memory 3 and are displayed on the monitor 6 when retrieved therefrom by the CPU 1.

The message shown in Fig. 4 is automatically switched to a menu of Fig. 5 after a lapse of, e.g., 5 seconds. The menu of Fig. 5 has a function of informing the operator that six kinds of adjustments are possible relative to chrome, hue, brightness, contrast, bias and gain. In addition, a cursor 20 is displayed continuously or intermittently at the left of the screen to indicate which of the adjustment modes is executed.

In this embodiment, the adjustments of four picture qualities such as chrome, hue, brightness and contrast levels are so executed that, upon completion of one quality adjustment, the cursor is shifted automatically to the next adjustment. And with regard to the bias and gain, the operator sets the cursor at a desired position for the relevant adjustment by manually depressing the arrow key.

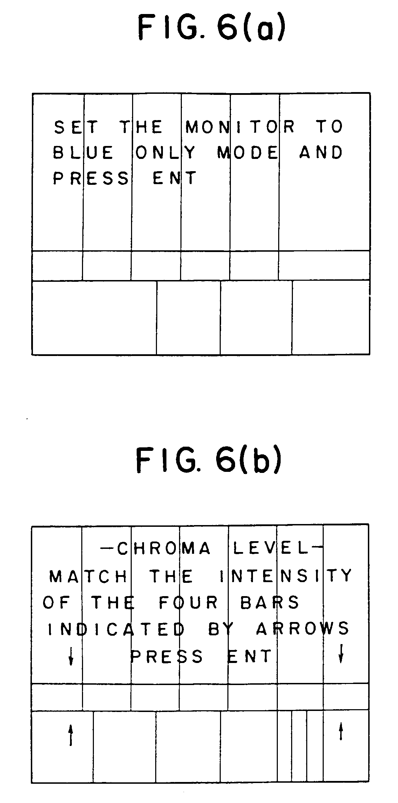

In Fig. 5 where the cursor is set at the position of the chrome adjustment mode, if the operator depresses the enter key 13 in such a state, the display content on the monitor 6 is changed to the content shown in Fig. 6(a). In this example, the background is an SMPTE color bar pattern generated from the signal generator 2, and when the shown message is displayed on the monitor 6 by the CPU 1, the operator is informed of the item adjustable at that time.

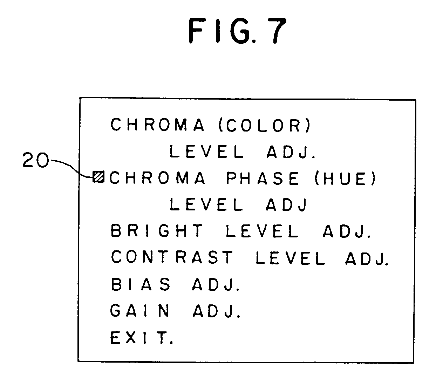

Upon depression of the enter key 13 by the operator according to the message, the display content on the monitor 6 is changed to the example shown in Fig. 6(b), so that the operator can adjust the desired picture quality (chrome level in this case) by depressing the arrow key 14a or 14b according to the message. And when the operator depresses the enter key 13 according to the message after completion of adjusting the chrome level, the display content on the monitor 6 is changed to the example shown in Fig. 7.

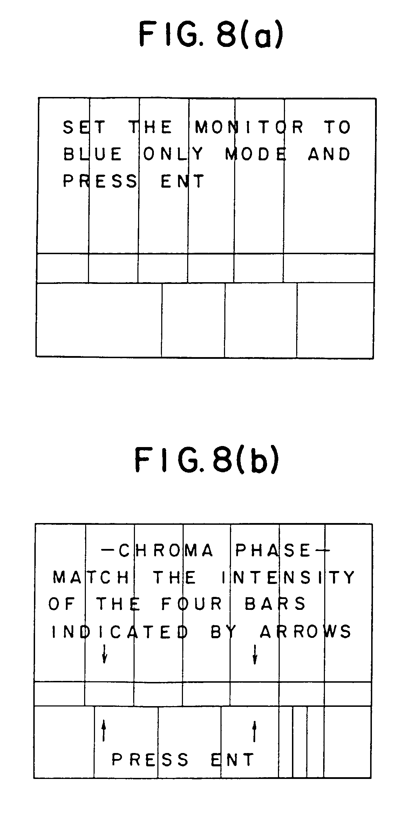

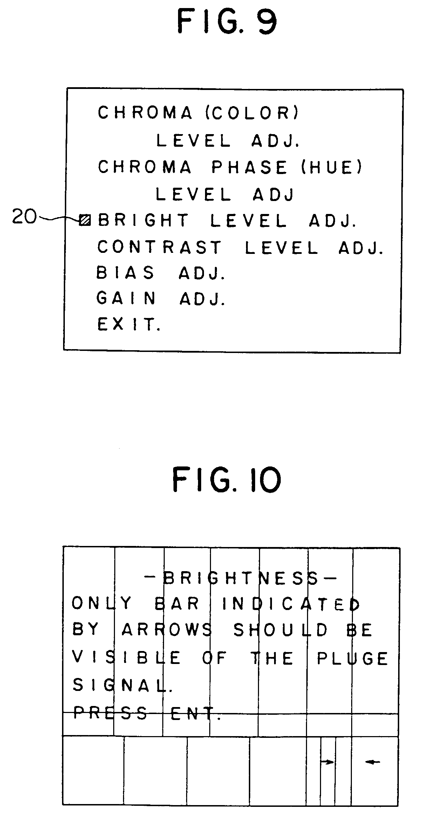

In this example, different from the aforementioned display content of Fig. 5, the cursor is set at the position for the hue adjustment. And if the operator depresses the enter key 13 according to the message exactly in the same manner as in the foregoing case of adjusting the chrome level, then the display content on the monitor 6 is reverted to the menu of Fig. 9 via the examples of Fig. 8 (a) and (b).

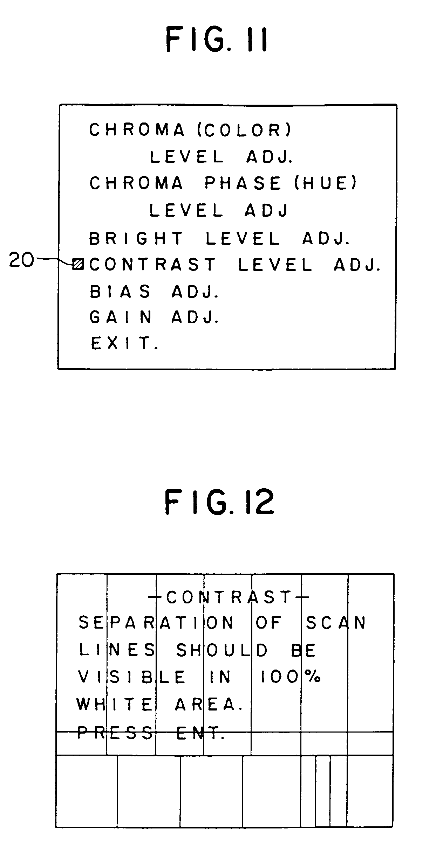

Figs. 10 through 13 show subsequent messages displayed while the memory 2 is accessed by the CPU 1 in the procedure of sequentially adjusting the brightness and contrast levels. Thus, the adjustments of chrome, hue, brightness and contrast levels can be executed with mere depression of the enter key 13 and the arrow keys 14a, 14b of the key input unit 4 by the operator according to the messages displayed on the screen.

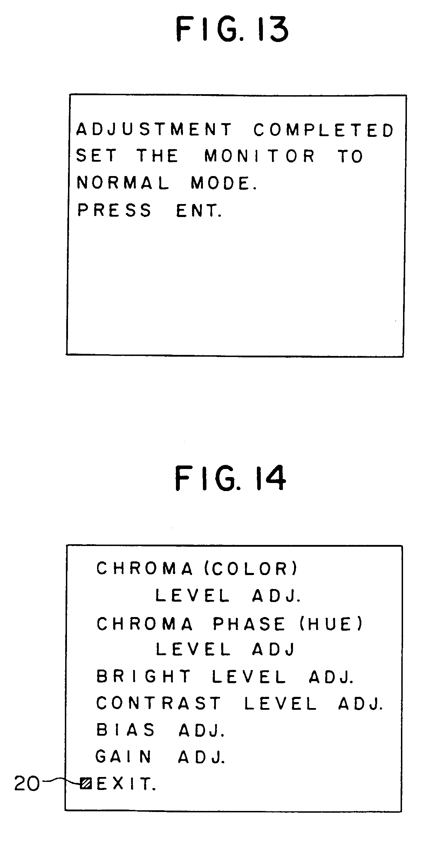

After completion of the series of adjustments, the display content on the monitor 6 is changed to the example of Fig. 14 where the cursor is placed at the position of EXIT to terminate the picture quality adjustment. Therefore, if the operator depresses the enter key 13 in this state, the apparatus is released from the picture quality adjustment mode to be ready for normal television watching.

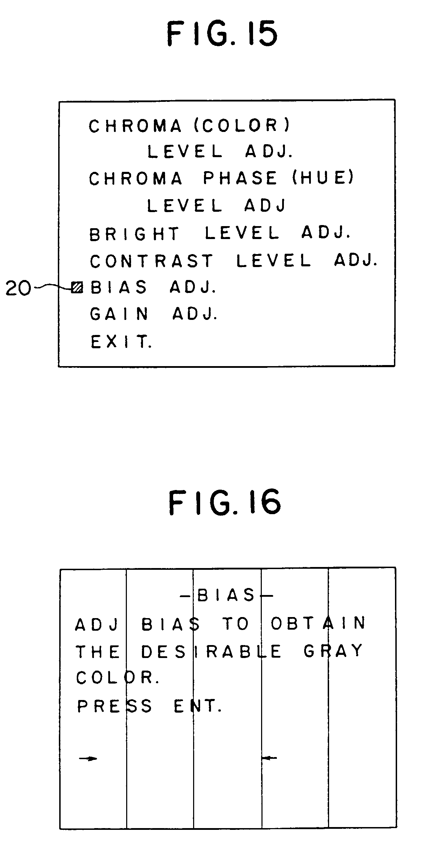

In case it is necessary to further adjust the bias and gain successively, the operator depresses the arrow key 14a or 14b of the key input unit 4 to shift the cursor to the position shown in Fig. 15. This procedure is based on the fact that it is not so frequent to perform the bias adjustment for determining the gray level or the gain adjustment for determining the gain at the white level. Therefore, although the procedure may be so established that the cursor is shifted automatically to the bias or gain adjustment in succession to the chrome, hue, brightness and contrast adjustments mentioned above, the operation in this embodiment is performed on the basis of the procedure that proceeds to the bias or gain adjustment mode with manual control of the cursor position.

If the operator depresses the enter key 13 upon shift of the cursor to the position of the bias adjustment mode, the display content of Fig. 16 is visually represented on the monitor 6. The background in this case is switched to a gray scale.

And when the operator depresses the enter key 13 after completion of the picture quality adjustment according to the message, the display content is switched to the example of Fig. 15 again. It is to be noted here that the cursor position is not changed in this case.

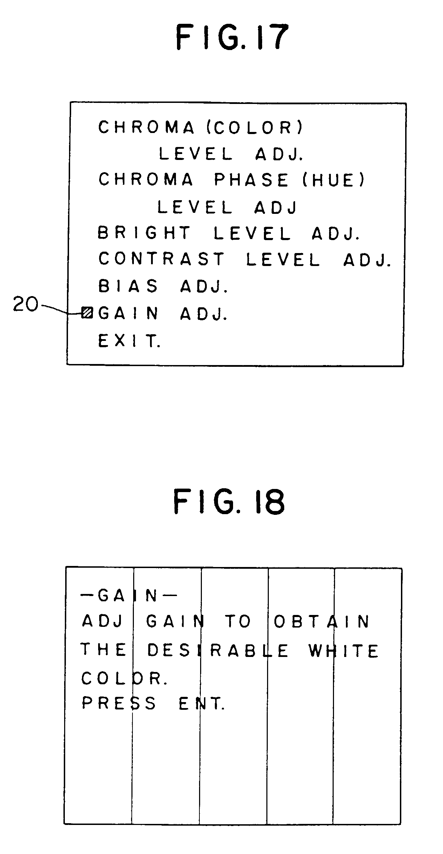

If it is necessary to execute the gain adjustment also, the operator shifts the cursor to the position of Fig. 17 and depresses the enter key 13. Then the display content on the monitor 6 is changed to the example of Fig. 18. And when the enter key 13 is depressed after the adjustment according to the message, the display content is reverted to the message of Fig. 17 again.

In the on-screen display apparatus of the present invention, as described hereinabove, messages signifying the procedure of picture quality adjustments are previously stored in the memory means, and the operation is so controlled by the control means that such messages are sequentially displayed on the monitor in conformity with the key manipulation by the operator. Therefore the requirement for the operator is merely to manipulate the keys according to the messages displayed on the monitor, hence eliminating the necessity of any expert knowledge or the operation manual to consequently facilitate the picture quality adjustments.

## Claims

1. An on-screen display apparatus for use in picture adjustments on a television monitor (6), comprising:
a memory means (3) for storing messages which signify the procedure of picture adjustments; and
a control means (1) for controlling the operation in such a manner as to retrieve the messages from said memory means (3) and to display the messages on said monitor (6) characterised in that during picture adjustment one of a plurality of test patterns is displayed on said display.

2. The apparatus according to claim 1, further comprising a key input unit (4) manipulated by an operator to transmit a desired command to said control means (1), wherein said key input unit has test pattern selector keys (12), a message/enter key (13) and arrow keys (14a, 14b).

3. The apparatus according to claim 2, wherein said pattern selector keys (12) are used for selecting any one of said test patterns generated from a signal generator (2); and said message/enter key (13) is used for shifting the adjustment process to a desired picture quality adjustment mode or for indicating display of messages or confirmation of each adjustment operation.

4. The apparatus according to claim 2 or 3, wherein the stored messages are retrieved and displayed in response to the operator's manipulation of said key input unit (4).

5. The apparatus according to claim 2, 3 or 4 wherein adjustment of the bias, for determining the grey level, and gain, for determining the white level of the displayed image adjustment of the bias, for determining the grey level, and gain, for determining the white level of the displayed image selectable and executable by depression of said arrow keys.

6. The apparatus according to any one of the preceding claims, wherein picture quality adjustment modes for chrome, hue, brightness and contrast levels are selectable with shift of an arrow key (14a, 14b) in compliance with the messages.

7. The apparatus according to any one of the preceding claims, wherein said control means consists of a CPU (1).

## Patentansprüche

1. Bildanzeigegerät (On-Screen-Anzeigegerät) zur Verwendung bei Bildeinstellungen bei einem Fernsehmonitor (6), mit:
einem Speicher (3) zum Speichern von Informationen, die den Ablauf von Bildeinstellungen anzeigen; und
einer Steuerung (1) zum Steuern des Betriebs in einer Weise, um die Informationen aus dem Speicher (3) zu holen und die Informationen auf dem Monitor (6) anzuzeigen,
**dadurch gekennzeichnet, daß** während der Bildeinstellung eines von mehreren Testmustern auf der Anzeigeeinheit angezeigt wird.

2. Gerät nach Anspruch 1, welches außerdem eine Tasteneingabeeinheit (4) umfaßt, die durch eine Bedienungsperson gehandhabt wird, um einen gewünschten Befehl zur Steuerung (1) zu übertragen, wobei die Tasteneingabeeinheit Testmuster-Auswahltasten (12), eine Informations/Eingabetaste (13) und Pfeiltasten (14a, 14b) hat.

3. Gerät nach Anspruch 2, wobei die Musterauswahltasten (12) verwendet werden, um eines der Testmuster auszuwählen, die von einem Signalgenerator (2) erzeugt werden; und die Informations-/Eingabetaste (13) verwendet wird, um den Einstellprozeß auf einen gewünschten Bildqualitätseinstellmodus zu verschieben oder um eine Anzeige von Informationen oder eine Bestätigung eines jeden Einstellvorgangs anzuzeigen.

4. Gerät nach Anspruch 2 oder 3, wobei die gespeicherten Informationen in Abhängigkeit von der Bedienungsperson-Handhabung der Tasteneingabeeinheit (4) wiedergewonnen und angezeigt werden.

5. Gerät nach Anspruch 2, 3 oder 4, wobei die Einstellung der Vormagnetisierung zur Bestimmung des Graupegels und der Verstärkung zur Bestimmung des Weißpegels der angezeigten Abbildes durch Drücken der Pfeiltasten auswählbar und ausführbar sind.

6. Gerät nach einem der vorhergehenden Ansprüche, wobei die Bildqualitätseinstellmoden für den Sättigungspegel, den Farbtonpegel, den Helligkeitspegel und den Kontrastpegel mit Verschiebung einer Pfeiltaste (14a, 14b) gemäß den Informationen auswählbar sind.

7. Gerät nach einem der vorhergehenden Ansprüche, wobei die Steuerung aus einer CPU (1) besteht.

## Revendications

1. Dispositif d'affichage sur écran pour une utilisation dans des réglages d'image d'un moniteur de télévision (6), comprenant :
- un moyen de mémoire (3) pour le stockage des messages représentant la procédure des réglages d'image; et
- un moyen de commande (1) pour la commande des opérations de façon à extraire les messages dudit moyen de mémoire (3) et à afficher les messages sur ledit moniteur (6);
dispositif caractérisé en ce que, lors du réglage d'image, un motif d'une pluralité de motifs de test est affiché sur ledit affichage.

2. Dispositif selon la revendication 1,
comprenant, de plus, une unité d'entrée par touches (4) manipulée par un opérateur pour transmettre une commande désirée audit moyen de commande (1), ladite unité d'entrée par touches possédant des touches de sélection de motif de test (12), une touche de message/entrée (13) et des touches de flèche (14a, 14b).

3. Dispositif selon la revendication 2,
dans lequel lesdites touches de sélection de motif sont utilisées pour la sélection d'un quelconque desdits motifs de test générés par un générateur de signal (2) et ladite touche de message/entrée (13) est utilisée pour faire passer le processus de réglage sur un mode désiré de réglage de la qualité d'image ou pour indiquer l'affichage des messages ou la confirmation de chaque opération de réglage.

4. Dispositif selon la revendication 2 ou 3, dans lequel les messages stockés sont extraits et affichés en réponse à la manipulation par l'opérateur de ladite unité d'entrée par touches (4).

5. Dispositif selon la revendication 2, 3 ou 4, dans lequel le réglage de la polarisation pour la détermination des niveaux de gris et le réglage du gain pour la détermination du niveau de blanc de l'image affichée peuvent être sélectionnés et exécutés par pression sur lesdites touches de flèche.

6. Dispositif selon l'une quelconque des revendications précédentes, dans lequel les modes de réglage de la qualité d'image pour les niveaux de chromatisme, de teintes, de luminosité et de contraste peuvent être sélectionnés par déplacement d'une touche de flèche (14a, 14b) selon les messages.

7. Dispositif selon l'une quelconque des revendications précédentes, dans lequel ledit moyen de commande est constitué par une CPU (1).
